# EUROPÄISCHE PATENTSCHRIFT

(11) **EP 0 506 994 B1**
(45) Veröffentlichungstag und Bekanntmachung des Hinweises auf die Patenterteilung: **26.01.1994**
(21) Anmeldenummer: 91105374.2
(22) Anmeldetag: 05.04.1991
(51) Int. Cl.: B65G 13/07, B65G 13/071

(54) **Förderrollenbahn mit Riemenantrieb**
Belt-driven roller-conveyor
Transporteur à rouleaux entraîné par courroie

(43) Veröffentlichungstag der Anmeldung: 07.10.1992
(73) Patentinhaber: Interroll Holding AG, CH-6592 San Antonino (CH)
(72) Erfinder: vom Stein, Hans, W-5632 Wermelskirchen 3 (DE)
(74) Vertreter: Müller-Boré & Partner Patentanwälte

(56) Entgegenhaltungen:
- DE-A- 2 550 143
- DE-A- 3 308 263
- NL-A- 8 901 915
- US-A- 4 308 946

## Beschreibung

Die Erfindung betrifft eine Förderrollenbahn mit Riemenantrieb bestehend aus Förderrollen, einem Antriebsriemen und Andruckrollen zum Andrücken des Antriebsriemens an die Förderrollen der Förderrollenbahn, wobei die Förderrollen sowie die Andruckrollen an einem die Förderrollenbahn seitlich begrenzenden Profilteil angeordnet sind und der Antriebsriemen zwischen den Andruckrollen und den Förderrollen verläuft, wobei die Andruckrollen einen zylinderförmigen Grundkörper sowie sich daran anschließende, ringförmig sich um den Umfang des zylindrischen Grundkörpers erstreckende und konusförmige Riemenandruckscheiben aufweisen.

Eine solche Förderrollenbahn geht aus der DE-A-2 550 143 hervor. Die dort gezeigte Förderrollenbahn besteht aus einzelnen Rollen, die an einem freien Ende eine Antriebsübertragungsrolle aufweisen. Die Förderrollen sind an einem Rahmenteil bzw. einer Seitenschiene gelagert. Unterhalb der Antriebsübertragungsrollen sind Führungsrollen vorgesehen, die eine umlaufende nutenförmige Ausnehmung zur Aufnahme eines Antriebsriennes aufweist. Der Antriebsriemen liegt einerseits auf der Führungsrolle auf und andererseits an der Antriebsübertragungsrolle an und dient zum Antrieb der Förmderrollen. Die Führungsrolle ist ebenfalls an der Seitenschiene des Rahmenteils angeordnet.

Die Seitenteile des Rahmens werden vorgefertigt und sind bereits mit Bohrungen für die Aufhängung bzw. Lagerung der Förderrollen sowie der Führungsrollen versehen. Die bei der Herstellung unvermeidlichen Toleranzprobleme und insbesondere die Lage der bezeichneten Bohrungen erfordern jedoch aufwendige Einstelleinrichtungen, um sicherzustellen, daß der Antriebsriemen von der Führungsrolle fest genug an die Antriebsübertragungsrolle gepreßt bzw. angedrückt wird, um den Antrieb der Förderrollen sicherzustellen. Solche Ein stelleinrichtungen können beispielsweise Langlöcher anstelle von Bohrungen zur Aufnahme der Führungsrollen sein. Mit Hilfe der Langlöcher ist es dann möglich die einzelnen Führungsrollen richtig zu justieren, um die Herstellungstoleranzen auszugleichen. Da die Förderrollenbahn jedoch auch bei einer relativ kurzen Förderstrecke ein Vielzahl von Andruckrollen aufweist, ist das Justieren der einzelnen Führungsrollen außerordentlich zeitaufwendig und somit kostenintensiv. Nichts anderes ergibt sich, wenn anstelle der Führungsrollen oder zusätzlich zu den Führungsrollen auch die Förderrollen durch entsprechende Langlochausbildung justiert werden können.

Es ist Aufgabe der vorliegenden Erfindung, bei einer Förderrollenbahn einen Riemenantrieb für eine Förderrollenbahn vorzuschlagen, bei dem unabhängig von Herstellungstoleranzen gewährleistet ist, daß der Antriebsriemen stets fest genug an den Förderrollen der Förderrollenbahn anliegt.

Die Aufgabe wir dadurch gelöst, daß die Andruckrolle lediglich eine Riemenandruckscheibe aufweist, wobei, in Richtung der Förderrollenbahn gesehen, die Riemenandruckscheibe bei den aufeinanderfolgenden oder zwei oder mehr aufeinanderfolgenden Andruckrollen abwechselnd rechts- oder linksseitig an den Andruckrollen angeordnet ist.

Während bei dem bekannten Riemenantrieb der Antriebsriemen in einer umlaufenden Nut der Führungsrolle geführt ist, ist eine solche Führung bei der erfindungsgemäßen Andruckrolle nicht vorgesehen. Der vorzugsweise im Querschnitt kreisförmige Antriebsriemen liegt vor Inbetriebnahme des Riemenantriebs an der Riemenandruckscheibe an, was durch die abwechselnde, rechts- und linksseitige Anordnung der Riemenandruckscheibe an den aufeinanderfolgenden Andruckrollen bedingt wird. Bei der abwechselnd rechts- und linksseitigen Anordnung der Riemenandruckscheiben wechselt sich sozusagen von Andruckrolle zu Andruckrolle eine linksseitig angeordnete Riemenandruckscheibe mit einer rechtsseitig angeordneten Riemenandruckscheibe ab. Der vorgeschlagene Riemenantrieb wird aber auch dann funktionieren, wenn bei zwei oder mehr aufeinanderfolgenden Andruckrollen die Riemenandruckscheibe vor dem Wechseln jeweils auf derselben Seite angeordnet ist. Der Antriebsriemen kann dabei gleichzeitig auch auf dem zylindrischen Grundkörper aufliegen. Durch die sich an den zylinderförmigen Grundkörper anschließende Riemenandruckscheibe und deren schräge Ausgestaltung sowie die Anlage der Antriebsriemen an der Riemenandruckscheibe hat der Antriebsriemen nach Inbetriebnahme des Riemenantriebs die Tendenz, die schräg ausgerichtete Riemenandruckscheibe in Richtung Förderrolle hinaufzulaufen. Durch diese an sich bekannte Eigenschaft von Antriebsriemen, schräge Flächen nach oben zu laufen, wird das durch die Herstellungstoleranzen bedingte Problem der unterschiedlichen Abstände zwischen Förderrollen und Andruckrollen gelöst, da die Aufwärtsbewegung des Antriebsriemens auf der Riemenandruckscheibe durch die Anordnung der Förderrollen begrenzt wird und sich der Antriebsriemen somit in der gewünschten festen Weise an den Förderrollen anlegt. Dabei sollte der Abstand zwischen dem Abschluß der Riemenandruckscheibe und den Förderrollen vorteilhafterweise kleiner sein als der Durchmesser des Antriebsriemens, da der Antriebsriemen sonst zwischen der Andruckrolle und der Förderrolle von der Andruckrolle abspringen könnte. Somit wird ein Riemenantrieb zur Verfügung gestellt, der die grundsätzlich angestrebte geringe Geräuschentwicklung aufweist und die Verwendung einfach ausgebildeter Förderrollen zuläßt, wobei jedoch trotz der vorhandenen Herstellungstoleranzen der Antriebsriemen stets eine gute Friktion bzw. Anlage an der Förderrolle aufweist.

Der Antriebsriemen kann durch den links- und rechtsseitigen Wechsel der Riemenandruckscheibe eine Schlingerbewegung erfahren, die allerdings, abhängig von dem Abstand der einzelnen Andruckrollen zueinander, begrenzt ist und die positive Wirkung hat, daß der Abtriebsriemen ständig unter Spannung gehalten wird und nicht zwischen den Andruckrollen durchhängt.

Die Riemenandruckscheibe stellt eine seitliche Begrenzung der Andruckrolle in Form einer schiefen Ebene dar. Die Riemenandruckscheibe kann dabei auch als Kreisringscheibe, schräg verlaufender Flansch oder Andruck- bzw. Auflaufscheibe bezeichnet werden. Durch die vorgeschlagene Konfiguration der Andruckrolle wird sozusagen ein sich selbst nachstellender bzw. selbst regelnder Riemenantrieb über eine schiefe Ebene zur Verfügung gestellt. Die Tendenz des Antriebsriemens, die Riemenandruckscheibe hinaufzulaufen, kann auch als ein Nachlaufen des Antriebsriemens bezeichnet werden.

Vorzugsweise ist die Riemenandruckscheibe insbesondere einstückig an dem zylinderförmigen Grundkörper der Andruckrolle angeordnet. Der zylinderförmige Grundkörper der Andruckrolle kann dann zusammen mit der Riemenandruckscheibe hergestellt und muß nicht gesondert gefertigt und dann montiert werden.

Die Riemenandruckfläche der Riemenandruckscheibe ist unter einem Winkel von vorzugsweise 45 ° zur Vertikalen durch die Achse der Andruckrolle, von deren Mittelpunkt aus gesehen nach außen, geneigt. Bei diesem Grad der Neigung ergibt sich ein optimiertes Auflaufen des Antriebsriemens auf der Riemenandruckfläche der Riemenandruckscheibe. Vom Mittelpunkt der Riemenandruckrolle aus gesehen stellt sich die Riemenandruckscheibe und somit die Riemenandruckfläche als konische Erweiterung des zylinderförmigen Grundkörpers dar. Die Höhe der Riemenandruckscheibe, vom zylindrischen Grundkörper aus gesehen, entspricht vorzugsweise dem halben Durchmesser des Antriebsriemens. Die Breite der Riemenlauffläche, d.h. der Umfangsfläche des zylindrischen Grundkörpers, ist vorzugsweise geringer als der Durchmesser des Antriebsriemens. Durch diese vorzugsweisen Abmessungen von Grundkörper und Riemenscheibe kann die gesamte Andruckrolle entsprechend klein und platzsparend ausgebildet werden.

Vorzugsweise ist am freien Ende der Riemenandruckscheibe zusätzlich eine sich im wesentlichen senkrecht zur Achse der Andruckrolle erstreckende Führungsscheibe angeordnet. Die Führungsscheibe kann dabei auch als senkrechter Flansch bezeichnet werden und hat die Aufgabe, zusätzlich sicherzustellen, daß der Antriebsriemen nicht von den Andruckrollen abspringt.

Die Riemenanlagefläche der Führungsscheibe ist vorteilhafterweise leicht schrägt zur Vertikalen durch die Achse der Andruckrolle, vom Mittelpunkt der Andruckrolle aus gesehen nach außen, insbesondere unter einem Winkel von 5 °, geneigt. Durch diese leichte Schräge bzw. Neigung der Führungsscheibe wird sichergestellt, daß der Antriebsriemen, sofern er über die Riemenandruckscheibe hinausläuft, die Führungsscheibe möglichst nur punktförmig berührt und vor allem auf der Andruckrolle verbleibt. Es ist dabei ausreichend, wenn die Höhe der Führungsscheibe kleiner als der Riemendurchmesser ist, vorzugsweise die Hälfte des Riemendurchmessers beträgt.

Die Andruckrolle ist in einer besonderen Ausführungsform drehbar und längs verschiebbar auf einer Büchse gelagert. Durch die vorgeschlagene Ausbildung der Andruckrolle ist ein leichter, reibungsverlustfreier Lauf der Andruckrolle gewährleistet, sowie insbesondere die Möglichkeit gegeben, die Position der Andruckrolle auf der Büchse zu verändern.

Die Büchse ist auf einen Zapfen aufsteckbar ausgebildet, wobei der Zapfen mit seinem einen Ende in einem seitlichen Rahmen der Förderrollenbahn bzw. in dem entsprechenden Profilteil des Rahmens der Förderrollenbahn festgelegt ist und an seinem anderen Ende eine Mutter zur Sicherung der Büchse und der Andruckrolle aufweist. Die vorgeschlagene Anordnung kann es der Büchse ermöglichen, sich gegebenenfalls in deren Längsachsenrichtung auf dem Zapfen hin- und herzubewegen, wobei das Maß der Beweglichkeit durch die auf dem anderen Ende des Zapfens aufschraubbare Mutter variiert werden kann.

Zwischen der Mutter und der Andruckrolle können zum Verändern der Position der Andruckrolle Unterlegscheiben angeordnet sein, deren Durchmesser zumindest dem Durchmesser der Büchse entsprechen. Dadurch ist die Möglichkeitkeit gegeben, mit Hilfe der Unterlegscheiben die Position einzelner Andruckrollen zu den übrigen Andruckrollen zu verändern, um den Antriebsriemen bereits in der Ruhestellung weiter nach oben, d.h. in Richtung auf die Förderrollen hin, anzuheben. Auf einfache Weise können somit Toleranzprobleme ausgeglichen und/oder der Antriebsriemen bereits in der Ruhestellung bei Bedarf mit den Förderrollen in Kontakt gebracht werden.

Weiterhin kann zwischen Büchse und Andruckrolle auf der dem Profilteil zugewandten Seite eine weitere, insbesondere auf der Büchse angeordnete Einrichtung zum Verändern der Position der Andruckrollen vorgesehen sein. Dadurch kann die Anschlagstelle der Andruckrolle an dem, dem Profilteil zugewandten Ende der Büchse variiert werden. Dieses Ende der Büchse weist zur Sicherung der Andruckrolle vorteilhafterweise eine Art Spurkranz bzw. Kragen auf, so daß die Andruckrolle insbesondere nicht am Profilteil zur Anlage kommen kann.

Im Zusammenspiel zwischen den Unterlegscheiben einerseits und der weiteren Einrichtung andererseits kann der Antriebsriemen praktisch zwischen den Andruckrollen eingeklemmt werden, um eine feste Anlage des Antriebsriemens an den Riemenandruckscheiben zu erreichen und/oder den Antriebsriemen in Richtung der Förderrollen nach oben anzuheben. Bevorzugterweise befinden sich die zum Verstellen der Position der Andruckrollen zueinander verwendeten Unterlegscheiben bzw. die weitere Einrichtung jeweils an der Stelle der Andruckrolle, an der die Riemenandruckscheibe angeordnet ist. Der gewünschte Effekt wird jedoch bereits dann erreicht, wenn die Position der Andruckrollen, die die Riemenandruckscheibe auf der der Mutter zugewandten Seite aufweisen, durch den Einsatz von Unterlegscheiben verändert wird.

Der Abstand zwischen den Förderrollen und dem zylindrischen Grundkörper der Andruckrollen kann durch das Auflaufen des Antriebsriemens auf der Riemenandruckscheibe größer als der Riemendurchmesser sein. Während beim bisherigen Stand der Technik darauf geachtet werden mußte, daß der Abstand zwischen Förderrolle und Andruckrolle mindestens dem Durchmesser des Antriebsriemens entspricht, kann durch die Konfiguration der vorgeschlagenen Andruckrolle auch ein größerer Abstand zwischen Förderrolle und dem zylindrischen Grundkörper der Andruckrolle vorgesehen werden.

An der Förderrollenbahn sind die Andruckrollen vorzugsweise zwischen den einzelnen Förderrollen angeordnet. Es ist demnach nicht erforderlich, daß die Achsen der Andruckrollen und der entsprechenden Förderrollen in einer Ebene senkrecht zur Ebene der Förderrollenbahn angeordnet sind. Es ist vielmehr möglich, die Andruckrollen in den sich zwischen den einzelnen Förderrollen ergebenden Zwischenräumen anzuordnen, was insbesondere herstellungs- und wartungsmäßige Vorteile mit sich bringt.

Dabei können die Andruckrollen vorzugsweise lediglich in jedem zweiten Zwischenraum zwischen den Förderrollen angeordnet sein. Es ist nicht nötig, in jedem Zwischenraum eine Andruckrolle anzuordnen, wobei es trotzdem gewährleistet ist, daß der Riemenantrieb zuverlässig funktioniert, d.h., daß die Förderrollen zuverlässig durch den Antriebsriemen angetrieben werden. Es ist also möglich, daß bei der entsprechenden Förderrollenbahn zwischen benachbarten Andruckrollen jeweils zwei Förderrollen angeordnet sind.

Bei gebogenem Verlauf der Förderrollenbahn weisen die Förderrollen bekanntermaßen einen konisch zulaufenden Querschnitt auf und sind erfindungsgemäß vorzugsweise über ein sich konisch aufweitendes Zwischenstück mit dem an der Außenseite der gebogenen Förderrollenbahn angeordneten Rahmen- bzw. Profilteil verbunden. Es versteht sich dabei, daß auch die Andruckrolle sowie der Antriebsriemen auf der Außenseite der gebogenen Förderrollenbahn angeordnet sind.

Die konische Konfiguration des sich aufweitenden Zwischenstückes ermöglicht es dem Antriebsriemen, sich antreibend an einen Bereich der Förderrollen anzulegen, ohne dabei zum Mittelpunkt der gebogenen Förderrollenbahn hin gezogen zu werden und somit die benötigte Spannung des Antriebsriemens zu verlieren.

Das sich konisch aufweitende Zwischenstück besteht vorzugsweise aus einem zum Rahmen bzw. Profilteil benachbart angeordneten zylindrischen Basiskörper und einem sich daran anschließenden, schräg zur Förderrolle geneigten, ringförmig verlaufenden Riemenanlageflansch. Die benötigte Spannung des Antriebsriemens bleibt somit erhalten, da der Antriebsriemen sich einerseits an die Riemenandruckscheibe und andererseits an den Riemenanlageflansch anlegt, die zusammen sozusagen eine keilförmige Nut bilden, aus der der Antriebsriemen nicht zum Mittelpunkt der Förderrollenbahn hin herauslaufen kann. Es liegt damit praktisch eine Zwei-Rollen-Riemenführung vor.

Die vorliegende Erfindung soll anhand der nachfolgenden Zeichnungen noch näher in beispielhafter Weise unter der Grundlage bevorzugter Ausführungsformen erläutert werden. Es zeigt dabei:
- Fig. 1:: einen Querschnitt durch den seitlichen Abschluß einer Förderrollenbahn mit einer Ansicht der daran angeordneten Förderrolle und der Antriebsrolle mit dem zwischenliegenden Antriebsriemen,
- Fig. 2:: einen Querschnitt durch die Andruckrolle gemäß Fig. 1 und
- Fig. 3:: eine Darstellung gemäß Fig. 1 bei bogenförmigem Verlauf einer Förderrollenbahn.

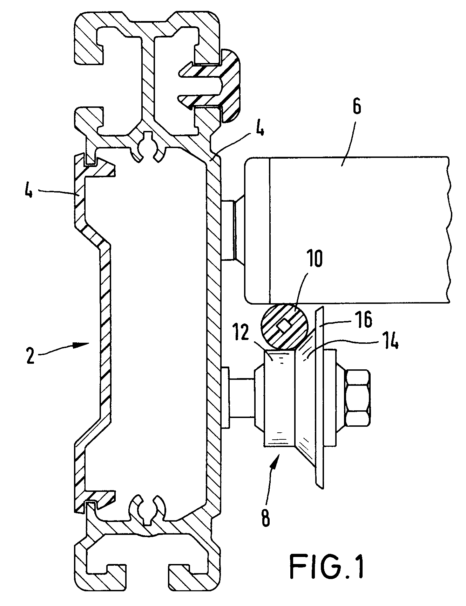

Fig. 1 zeigt im Querschnitt die seitliche Begrenzung einer Förderrollenbahn in Form eines Rahmens 2. Der Rahmen 2 ist aus einzelnen Profilteilen 4 zusammengesetzt. An dem Rahmen 2 angeordnet sind eine Förderrolle 6 und eine darunter liegende Andruckrolle 8. Die Förderrolle 6 und die Andruckrolle 8 sind mit ihren entsprechenden Lagerzapfen in nicht dargestellten Bohrungen in einem der Profilteile 4 gelagert. Bei den Profilteilen 4 handelt es sich um vorgefertigte Teile, die bei Anlieferung bereits die entsprechenden Bohrungen aufweisen. Durch die unvermeidbaren Herstellungstoleranzen kann der vorbestimmte Abstand zwischen den Mittelpunkten der Lagerbohrungen für die Förderrolle 6 und die Andruckrolle 8 erhebliche Unterschiede aufweisen. Um dennoch die Anlage des zwischen der Förderrolle 6 und der Andruckrolle 8 angeordneten, im Querschnitt kreisförmigen Antriebsriemens 10 an der Förderrolle 6 sicherzustellen, weist die Andruckrolle 8 eine besondere Konfiguration auf, während die Förderrolle 6 in üblicher Weise bei einem Riemenantrieb der Förderrollenbahn als zylinderförmiger Körper ausgebildet ist. Die Andruckrolle 8 besteht aus einem zylinderförmigen Grundkörper 12, an den sich eine Riemenandruckscheibe 14 anschließt. In Richtung der Förderrollenbahn gesehen, sind die hintereinander angeordneten Andruckrollen 8 wechselseitig, d.h. links- und rechtsseitig abwechselnd, mit der Riemenandruckscheibe 14 versehen. Der Riemenantrieb funktioniert allerdings auch dann, wenn zwei oder mehr aufeinanderfolgende Andruckrollen 8 die Riemenandruckscheibe 14 vor dem Wechseln jeweils auf derselben Seite angeordnet aufweisen. Da der Antriebsriemen 10 bei Inbetriebnahme des Riemenantriebs die Tendenz hat, auf der schräg zum zylindrischen Grundkörper 12 angeordneten Riemenandruckscheibe 14 nach oben, in Richtung auf die Förderrolle 6 hin, zu laufen, ist die angestrebte feste Anlage des Antriebsriemens 10 an der Förderrolle 6 sichergestellt. Durch die wechselseitige Anordnung der Riemenandruckscheibe 14 auf den Andruckrollen kann eine Schlingerwegung des Antriebsriemens 10 zwischen den einzelnen Andruckrollen 8 erzeugt werden, die ein permanentes Unter-Spannung-Halten des Antriebsriemens verursacht und zudem das Auflaufen des Antriebsriemens 10 auf der Riemenandruckfläche 30 unterstützt.

Als zusätzliche Sicherung gegen ein ungewolltes Abspringen des Antriebsriemens 10 von der Andruckrolle 8 über den höchsten Punkt der Riemenandruckscheibe 14 hinaus ist an dem freien Ende der Riemenandruckscheibe 14 eine Führungsscheibe 16 angeordnet. Dies insbesondere auch deshalb, weil die Andruckrolle 8 nicht unmittelbar unter der Führungsrolle 6 angeordnet sein muß, sondern vorzugsweise in den sich zwischen den einzelnen Förderrollen 6 ergebenden Zwischenräumen angeordnet ist, so daß die Achsen der Förderrolle 6 und der Andruckrolle 8 nicht in einer, senkrecht zur Längsrichtung der Förderrollenbahn verlaufenden Ebene liegen.

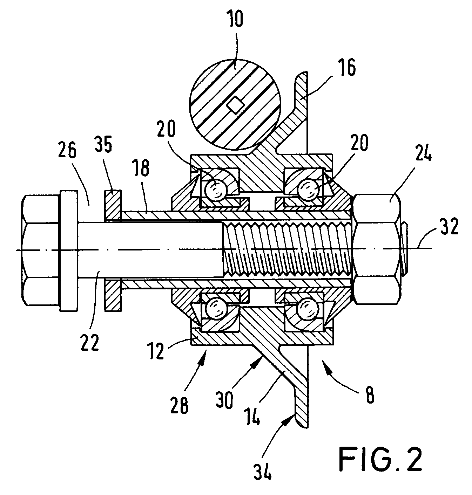

Die besondere Konfiguration der Andruckrolle 8 läßt sich noch besser anhand der Fig. 2 erläutern. Die Fig. 2 zeigt einen Querschnitt durch die Andruckrolle 8, die auf einer Büchse 18 über Rollenlager 20 drehbar gelagert ist. Auf eine Darstellung der Förderrolle sowie des Rahmens der Förderrollenbahn wird in Fig. 2 verzichtet. Die Büchse 18 ist auf einen Zapfen 22 aufgesteckt, der mit seinem einen Ende in dem entsprechenden Profilteil des die Förderrollenbahn seitlich begrenzenden Rahmens fest gelagert ist. Das nicht dargestellte Profilteil wäre an der mit 26 bezeichneten Stelle angeordnet. In einer bevorzugten Ausführungsform ist die Büchse 18 ohne Spiel direkt an dem Profilteil angeordnet, wobei es jedoch auch möglich ist, zwischen der Büchse 18 und dem Profilteil ein Spiel vorzusehen. Am anderen Ende des Zapfens 22 ist eine Mutter 24 vorgesehen, die ein Herabrutschen der Büchse 18 von dem Zapfen 22 sowie der Andruckrolle 8 von der Büchse 18 verhindert und gegebenenfalls die Büchse 18 zwischen dem Profilteil und der Mutter 24 einspannt. Es versteht sich, daß die Andruckrolle 8 drehbar und längsverschiebbar auf der Büchse 18 angeordnet ist. Die Andruckrolle 8, die aus dem zylinderförmigen Grundkörper 12 und der sich daran anschließenden, schräg dazu verlaufenden Riemenandruckscheibe 14 sowie der sich wiederum daran anschließenden Führungsscheibe 16 besteht, kann verhältnismäßig klein und vor allem einstückig ausgebildet werden. Es genügt dabei, daß die Breite der Riemenlauffläche 28 des zylinderförmigen Grundkörpers 12 geringer als der Durchmesser des Antriebsriemens 10 ist. Die Höhe der Riemenandruckscheibe 14 ist, vom zylindrischen Grundkörper 12 aus gesehen, etwa nur halb so groß wie der Durchmesser des Antriebsriemens 10, was auch für die Höhe der Führungsscheibe 16 zutrifft.

Bei Stillstand des Riemenantriebs ist der Antriebsriemen 10 mit der Riemenandruckfläche 30 der Riemenandruckschreibe 14 in Anlage und kann auch auf der Riemenlauffläche 28 des zylindrischen Grundkörpers 12 aufliegen. Bei Inbetriebnahme des Riemenantriebs wird der Antriebsriemen 10 auf der Riemenandruckfläche 30 nach oben in Richtung der Förderrollen laufen und so die gewünschte feste Anlage des Antriebsriemens 10 an den Förderrollen mitsichbringen. Die Riemenandruckfläche 30 ist dabei vorzugsweise unter einem Winkel von 45 ° zur Vertikalen durch die Achse 32 der Andruckrolle 8, von deren Mittelpunkt aus gesehen nach außen, geneigt. Die Riemenanlagefläche 34 der Führungsscheibe 16 hingegen ist nur leicht zur Vertikalen durch die Achse 32 der Andruckrolle 8, insbesondere unter einem Winkel von 5 °, vom Mittelpunkt der Andruckrolle 8 aus gesehen, nach außen, geneigt. Diese leichte Neigung ermöglicht eine nur punktförmige Anlage des Antriebsriemens 10 an der Riemenandruckfläche 34 der Führungsscheibe 16 für den Fall, in dem der Antriebsriemen 10 die Tendenz hat, die Riemenanlagefläche 30 der Riemenandruckscheibe 14 nach oben bzw. außen hin zu verlassen. Die Führungsscheibe 16 sorgt dafür, daß der Antriebsriemen 10 auf keinen Fall von der Andruckrolle 8 abspringen kann.

In Fig. 2 ist die Riemenandruckscheibe 14 rechtsseitig von der Andruckrolle 8 angeordnet. Um den Antriebsriemen 10 sicher an der Riemenandruckfläche 30 der Riemenandruckscheibe 14 bereits bei Stillstand des Riemenantriebs zur Anlage zu bringen und/oder den Antriebsriemen 10 in Richtung zur Förderrolle 6 nach oben zu bewegen, können zwischen der Mutter 24 und der Andruckrolle 8 Unterlegscheiben angeordnet sein, deren Durchmesser zumindest dem Außendurchmesser der Büchse entsprechen, um dadurch die Andruckrolle 8 zum Profilteil bzw. zum Antriebsriemen 10 hinzubewegen. Dadurch kann ein keilförmiges Einklemmen des Antriebsriemens 10 zwischen den hintereinanderliegenden Antriebsrollen 8 erreicht werden, da an der nächsten oder einer der nächsten Andruckrollen 8 die Riemenandruckscheibe 14 linksseitig von der Andruckrolle 8 angeordnet sein wird. Um den Effekt des keilförmigen Einklemmens des Antriebsriemens 10 zwischen den Andruckrollen 8 zu verstärken, kann insbesondere bei linksseitig angeordneter Riemenandruckscheibe 14 eine weitere Einrichtung zwischen dem Spurkranz bzw. Kragen 35 und der Andruckrolle 8 angeordnet sein. Diese weitere Einrichtung kann insbesondere auf der Büchse 18 angeordnet sein und bei entsprechender Anwendung dafür sorgen, daß die Andruckrolle 8 vom Rahmen der Förderrollenbahn weg in Richtung auf den Antriebsriemen 10 bewegt wird, um bei linksseitiger Anordnung der Riemenandruckscheibe 14 den Antriebsriemen 10 von dem Rahmen der Förderrollenbahn wegzubewegen, um ihn zwischen den links- und rechtsseitig angeordneten Riemenandruckscheiben 14 einzuklemmen. Im Regelfall wird es jedoch genügen, die genannten Unterlegscheiben bei den Andruckrollen 8 mit rechtsseitiger Anordnung der Riemenandruckscheibe 14 vorzusehen, um das angestrebte Aufeinanderzubewegen der Andruckrollen 8 und der dadurch entstehenden Vorteile zu erreichen.

Die in Fig. 1 und 2 gezeigten Teile einer Förderrollenbahn werden ersichtlicherweise für Förderrollenbahnen verwendet, die geradlinig oder höchstenfalls nur leicht gebogen ausgeführt sind.

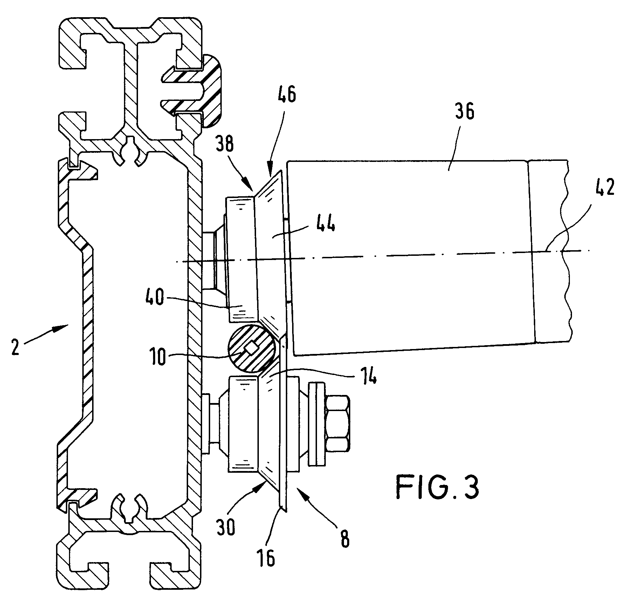

Die Ausbildung bei gebogenem Verlauf einer Förderrollenbahn zeigt Fig. 3, die, abgesehen von der Förderrolle 36, mit den Teilen aus Fig. 1 übereinstimmt. Entsprechend werden für die identischen Teile in Fig. 1 und 3 die gleichen Bezugsziffern verwendet.

In bekannter Weise ist bei gebogenem Verlauf einer Förderrollenbahn die Förderrolle 36 mit einem konisch sich verjüngendem Querschnitt versehen. Dargestellt ist die Außenseite der gebogenen Förderrollenbahn, an welcher der im Durchmesser größere Querschnitt der Förderrolle 36 angeordnet ist. An dieser Außenseite der Förderrollenbahn ebenfalls angeordnet sind die Andruckrolle 8 und der zwischen der Andruckrolle 8 und der Förderrolle 36 befindliche im Querschnitt kreisförmige Antriebsriemen 10. Während in der Fig. 1 der Antriebsriemen 10 am zylinderförmigen Umfang der Förderrolle 6 anliegt, kommt der Antriebsriemen 10 bei der Darstellung gemäß Fig. 3 an einem, sich konisch aufweitendem Zwischenstück 38 zur Anlage. Das Zwischenstück 38 ist zwischen der Innenseite des Rahmens 2 und dem eigentlichen Beginn der Förderrolle 36 angeordnet und besteht aus einem zum Rahmen 2 benachbart angeordneten zylindrischen Basiskörper 40 und einem sich daran anschließenden, schräg zur Achse 42 der Förderrolle 36 zu dieser hin geneigten, ringförmig verlaufenden Riemenanlageflansch 44. Der Riemenanlageflansch 44 bzw. dessen dem Antriebsriemen zugewandte Fläche 46 ist vorzugsweise 45 ° zur Achse 42 der Förderrolle 36, in Richtung auf den Mittelpunkt der Förderrolle 36 hin, geneigt. Der Riemenanlageflansch 44 ist dabei einstückig mit dem Basiskörper 40 verbunden. Die äußere Konfiguration des Zwischenstückes 38 und der Andruckrolle 8 entsprechen sich in etwa, abgesehen von der auf der Andruckrolle 8 zusätzlich angeordneten Führungsscheibe 16. Die Führungsscheibe 16 kann bei der Andruckrolle 8 jedoch jederzeit weggelassen werden, ohne daß dabei die Funktionalität beeinträchtigt werden würde. Es bietet sich jedoch an, die für den geradlinigen Verlauf von Förderrollenbahnen verwendeten Andruckrollen 8 auch bei der in Fig. 3 gezeigten Förderrollenbahn mit gebogenem Verlauf zu verwenden. Die Anlage des Antriebsriemens 10 an der Fläche 46 des Riemenanlageflansches 44 sowie der Riemenandruckfläche 30 der Riemenandruckscheibe 14 ergibt eine nutartige Anlage des Antriebsriemens 10, die verhindert, daß der Antriebsriemen 10 in Richtung auf den Mittelpunkt der Förderrolle 36 hin von der Andruckrolle 8 bzw. dem Zwischenstück 38 abspringt. Dadurch ist es auch möglich, die erforderliche Spannung des Antriebsriemens 10 im gebogenen Verlauf der Förderrollenbahn zu erzeugen und beizubehalten. Auch hier bedingen die schräge Ausgestaltung der Riemenandruckfläche 30 der Riemenandruckscheibe 14 und der Fläche 46 des zylindrischen Basiskörpers 40 ein Auflaufen des Antriebsriemens 10 auf der Fläche 46 sowie der Riemenandruckfläche 30, wodurch die feste Anlage des Antriebsriemens 10 an dem Zwischenstück 38 der Förderrolle 36 sichergestellt ist. Auch bei gebogenem Verlauf der Förderrollenbahn gemäß Fig. 3 sind die Andruckrollen 8 vorzugsweise in den zwischen den Förderrollen 36 liegenden freien Zwischenräumen angeordnet, wobei auch hier nicht jeder Zwischenraum zwischen den einzelnen Förderrollen 36 mit einer Andruckrolle 8 belegt sein muß.
- 2: Rahmen
- 4: Profilteil
- 6: Förderrolle
- 8: Andruckrolle
- 10: Antriebsriemen
- 12: zylindrischer Grundkörper
- 14: Riemenandruckscheibe
- 16: Führungsscheibe
- 18: Büchse
- 20: Rollenlager
- 22: Zapfen
- 24: Mutter
- 26: Stelle
- 28: Riemenlauffläche
- 30: Riemenandruckfläche
- 32: Achse
- 34: Riemenanlagefläche
- 35: Kragen
- 36: Förderrolle
- 38: Zwischenstück
- 40: zylindrischer Basiskörper
- 42: Achse
- 44: Riemenanlageflansch
- 46: Fläche

## Patentansprüche

1. Förderrollenbahn mit Riemenantrieb, bestehend aus Förderrollen (6; 36), einem Antriebsriemen (10) und Andruckrollen (8) zum Andrücken des Antriebsriemens (10) an die Förderrollen (6; 36) der Förderrollenbahn, wobei die Förderrollen (6; 36) sowie die Andruckrollen (8) an einem die Förderrollenbahn seitlich begrenzenden Profilteil (2) angeordnet sind und der Antriebsriemen (10) zwischen den Andruckrollen (8) und den Förderrollen (6; 36) verläuft, wobei jede Andruckrolle (8) einen zylinderförmigen Grundkörper (12) sowie lediglich eine sich daran anschließende, ringförmig sich um den Umfang des zylindrischen Grundkörpers (12) erstreckende und konusförmige Riemenandruckscheibe (14) aufweist, wobei
in Richtung der Förderrollenbahn gesehen, die Riemenandruckscheibe (14) bei den aufeinanderfolgenden oder zwei oder mehr aufeinanderfolgenden Andruckrollen (8) abwechselnd rechts- und linksseitig an den Andruckrollen angeordnet ist.

2. Riemenantrieb nach Anspruch 1, wobei die Riemenandruckscheibe (14), insbesondere einstückig, an dem zylinderförmigen Grundkörper (12) der Andruckrolle (8) angeordnet ist.

3. Riemenantrieb nach Anspruch 1 oder 2, wobei die Riemenandruckfläche (30) der Riemenandruckscheibe (14) unter einem Winkel von vorzugsweise 45 ° zur Vertikalen durch die Achse (32) der Andruckrolle (8), von deren Mittelpunkt aus gesehen nach außen, geneigt ist.

4. Riemenantrieb nach einem der Ansprüche 1 bis 3, wobei am freien Ende der Riemenandruckscheibe (14) eine sich im wesentlichen senkrecht zur Achse (32) der Andruckrolle (8) erstreckende Führungsscheibe (16) angeordnet ist.

5. Riemenantrieb nach Anspruch 4, wobei die Riemenanlagefläche (34) der Führungsscheibe (16) leicht schräg zur Vertikalen durch die Achse (32) der Andruckrolle (8), vom Mittelpunkt der Andruckrolle (8) aus gesehen nach außen, insbesondere unter einem Winkel von 5 °, geneigt ist.

6. Riemenantrieb nach einem der Ansprüche 1 bis 5, wobei die Andruckrolle (8) drehbar und längsverschiebbar auf einer Büchse (18) gelagert ist.

7. Riemenantrieb nach Anspruch 6, wobei die Büchse (18) auf einen Zapfen (22) aufsteckbar ist, der mit seinem einem Ende im Profilteil (4) festgelegt und an seinem anderen Ende eine Mutter (24) zur Sicherung der Büchse (18) und der Andruckrolle (8) aufweist.

8. Riemenantrieb nach Anspruch 6 oder 7, wobei zwischen der Mutter (24) und der Andruckrolle (8) zum Verändern der Position der Andruckrolle (8) Unterlegscheiben angeordnet sind, deren Durchmesser zumindest dem Durchmesser der Büchse (18) entsprechen.

9. Riemenantrieb nach einem der Ansprüche 6 bis 8, wobei zwischen Büchse (18) und Andruckrolle (8) auf der dem Profilteil (4) zugewandten Seite eine weitere, insbesondere auf der Büchse (18) angeordnete Einrichtung zum Verändern der Position der Andruckrolle (8) angeordnet ist.

10. Riemenantrieb nach einem der Ansprüche 1 bis 9, wobei der Abstand zwischen den Förderrollen (6) und dem zylindrischen Grundkörper (12) der Andruckrollen (8) größer als der Durchmesser des Antriebsriemens (10) ist.

11. Riemenantrieb nach einem der Ansprüche 1 bis 10, wobei die Andruckrollen (8) in Längsrichtung der Förderrollenbahn gesehen, zwischen den einzelnen Förderrollen (6; 36) angeordnet sind.

12. Riemenantrieb nach einem der Ansprüche 1 bis 11, wobei die Andruckrollen (8) in jedem zweiten Zwischenraum zwischen den Förderrollen (6, 36) angeordnet sind.

13. Riemenantrieb nach einem der Ansprüche 1 bis 12, wobei bei gebogenem Verlauf der Förderrollenbahn die Förderrolle (36) über ein sich konisch aufweitendes Zwischenstück (38) mit dem an der Außenseite der Förderrollenbahn angeordneten Profilteil (4) verbunden ist.

14. Riemenantrieb nach Anspruch 13, wobei das sich konisch aufweitende Zwischenstück (38) aus einem zum Profilteil (4) benachbart angeordneten, zylindrischen Basiskörper (40) und einem sich daran anschließenden, schräg zur Achse (42) der Förderrolle (36) geneigten, ringförmig verlaufenden Riemenanlageflansch (44) besteht.

## Claims

1. Roller conveyor having a belt drive, comprising conveyor rollers (6; 36), a drive belt (10) and pressing rollers (8) for pressing the drive belt (10) against the conveyor rollers (6; 36) of the roller conveyor, in which the conveyor rollers (6; 36) and the pressing rollers (8) are disposed on a sectional part (4) laterally limiting the roller conveyor and the drive belt (10) runs between the pressing rollers (8) and the conveyor rollers (6; 36), each pressing roller (8) exhibiting a cylindrical main body (12) and only one belt-pressing disc (14) which adjoins the said main body (12), is conical in shape and extends around the periphery of the cylindrical main body (12) in an annular fashion, the belt-pressing disc (14) being dispossed in respect of the successive or two or more successive pressing rollers (8) alternately on the right and left sides of the pressing rollers, viewed in the direction of the roller conveyor.

2. Belt drive according to Claim 1, in which the belt-pressing disc (14) is disposed, particularly in one-piece, on the cylindrical main body (12) of the pressing roller (8).

3. Belt drive according to Claim 1 or 2, in which the belt-pressing face (30) of the belt-pressing disc (14) is inclined at an angle of preferably 45° to the vertical through the axis (32) of the pressing roller (8), in the outward direction viewed from the centre point of the said pressing roller.

4. Belt drive according to one of Claims 1 to 3, in which there is disposed at the free end of the belt-pressing disc (14) a guide disc (16) extending essentially perpendicular to the axis (32) of the pressing roller (8).

5. Belt drive according to Claim 4, in which the belt-contacting face (34) of the guide disc (16) is inclined slightly obliquely to the vertical through the axis (32) of the pressing roller (8), in the outward direction viewed from the centre point of the pressing roller (8), particularly at an angle of 5°.

6. Belt drive according to one of Claims 1 to 5, in which the pressing roller (8) is mounted on a bushing (18) in such a way as to be rotatable and longitudinally displaceable.

7. Belt drive according to Claim 6, in which the bushing (18) can be mounted onto a journal (22) which is fixed by its one end in the sectional part (4) and exhibits at its other end a nut (24) for securing the bushing (18) and the pressing roller (8).

8. Belt drive according to Claim 6 or 7, in which between the nut (24) and the pressing roller (8), for altering the position of the pressing roller (8), there are disposed washers, the diameters of which correspond at least to the diameter of the bushing (18).

9. Belt drive according to one of Claims 6 to 8, in which between the bushing (18) and the pressing roller (8) there is disposed, on the side facing the sectional part (4), a further device, disposed particularly on the bushing (18), for altering the position of the pressing roller (8).

10. Belt drive according to one of Claims 1 to 9, in which the distance between the conveyor rollers (6) and the cylindrical main body (12) of the pressing rollers (8) is greater than the diameter of the drive belt (10).

11. Belt drive according to one of Claims 1 to 10, in which the pressing rollers (8), viewed in the longitudinal direction of the roller conveyor, are disposed between the individual conveyor rollers (6; 36).

12. Belt drive according to one of Claims 1 to 11, in which the pressing rollers (8) are disposed in every second interspace between the conveyor rollers (6; 36).

13. Belt drive according to one of Claims 1 to 12, in which, where the course of the roller conveyor is curved, the conveyor roller (36) is connected by a conically expanding intermediate piece (38) to the sectional part (4) disposed on the outer side of the roller conveyor.

14. Belt drive according to Claim 13, in which the conically expanding intermediate piece (38) comprises a cylindrical basic body (40), disposed adjacent to the sectional part (4), and a thereto adjoined belt-contacting flange (44), which is inclined obliquely to the axis (42) of the conveyor roller (36) and has an annular course.

## Revendications

1. Transporteur à rouleaux entraîné par courroie, composé de rouleaux de transport (6;36) d'une courroie d'entraînement (10) et de galets de pression (8) servant à comprimer la courroie d'entraînement (10) contre les rouleaux (6;36) du transporteur, les rouleaux de transport (6;36) ainsi que les galets de pression (8) étant placés sur une pièce profilée (2) limitant latéralement le transporteur et la courroie d'entraînement (10) passant entre les galets de pression (8) et les rouleaux (6;36), tandis que chaque galet de pression (8) présente un corps cylindrique de base (12), ainsi que, s'y raccordant, purement et simplement, un disque de compression de la courroie (14) de forme conique s'étendant circulairement autour de la périphérie du corps de base cylindrique (12), cependant que, vu dans la direction du transporteur, le disque de compression de la courroie (14) est placé alternativement sur le côté droit ou le côté gauche des deux, ou plus, galets de pression (8) successifs.

2. Entraînement par courroie selon la revendication 1, le disque de compression de la courroie (14) étant placé, d'un seul tenant notamment, sur le corps de base cylindrique (12) du galet de pression (8).

3. Entraînement selon la revendication 1 ou 2, la surface de compression (30) du disque de compression de la courroie (14) étant inclinée, de 45° de préférence, par rapport à la verticale passant par l'axe (32) du galet de pression (8), en partant de son centre vers l'extérieur.

4. Entraînement selon l'une des revendications 1 à 3, un disque de guidage (16), qui, pour l'essentiel, s'étend perpendiculairement à l'axe (32) du galet de pression (8), étant placé à l'extrémité libre du disque de compression de la courroie (14).

5. Entraînement selon la revendication 4, la surface de contact de la courroie (34) du disque de guidage (16) étant légèrement oblique, sous un angle de 5° notamment, par rapport à la verticale passant par l'axe (32) du galet de pression (8), vu à partir du centre de ce dernier vers l'extérieur.

6. Entraînement selon l'une des revendications 1 à 5, le galet de pression (8) étant logé, capable de pivoter et de se déplacer longitudinalement, sur un manchon (18).

7. Entraînement selon la revendication 6, le manchon (18) pouvant être enfiché sur un tourillon (22), lequel est, par l'une de ses extrémités, fixé à la pièce profilée (4) et qui, à l'autre de ses extrémités, présente un écrou (24) servant à la sécurité du manchon (18) et du galet de pression (8).

8. Entraînement selon la revendication 6 ou 7, des rondelles, dont le diamètre correspond au moins à celui du manchon (18), étant placées entre l'écrou (24) et le galet de pression (8) et servant à modifier la position de ce dernier.

9. Entraînement selon l'une des revendications 6 à 8, un autre dispositif placé notamment sur le manchon (18), servant à modifier la position du galet de pression (8), étant mis en place entre le manchon (18) et le galet de pression (8) sur le côté tourné vers la pièce profilée (4).

10. Entraînement selon l'une des revendications 1 à 9, la distance entre les rouleaux transporteurs (6) et le corps de base cylindrique (12) des galets de pression (8) étant supérieure au diamètre de la courroie d'entraînement (10) .

11. Entraînement selon l'une des revendications 1 à 10, les galets de pression (8) étant placés entre les rouleaux de transport (6;36) pris isolément, ceci vu dans la direction longitudinale du transporteur à rouleaux.

12. Entraînement selon l'une des revendications 1 à 11, les galets de pression (8) étant placés tous les deux intervalles entre les rouleaux transporteurs (6;36).

13. Entraînement selon l'une des revendications 1 à 12, le rouleau de transport (36), pour un tracé incurvé du transporteur à rouleaux, étant relié, au moyen d'une pièce intermédiaire (38) s'élargissant coniquement, à la pièce profilée (4) placé sur le côté externe du transporteur à rouleaux.

14. Entraînement selon la revendication 13, la pièce intermédiaire s'élargissant coniquement (38) se composant d'un corps de base cylindrique (40) voisin de la pièce profilée (4) et, s'y raccordant, d'un collet de contact de la courroie (44) circulaire, incliné en oblique sur l'axe (42) du rouleau de transport (36).
